# EUROPEAN PATENT APPLICATION

(11) **EP 3 660 560 A1**
(43) Date of publication of application: **03.06.2020**
(21) Application number: 18838803.7
(22) Date of filing: 23.07.2018
(51) Int. Cl.: G02B 6/32

(54) **CONNECTION STRUCTURE OF LENSED OPTICAL FIBER**

(30) Priority: 25.07.2017 JP 2017143574
(71) Applicant: Toyo Seikan Group Holdings, Ltd., Shinagawa-ku Tokyo 141-8627 (JP)
(72) Inventor: MISU, Naoki, Shinagawa-ku, Tokyo 141-8627 (JP); SAITOH, Toshihide, Shinagawa-ku, Tokyo 141-8627 (JP); MARUYAMA, Naohumi, Shinagawa-ku, Tokyo 141-8627 (JP)
(74) Representative: Piticco, Lorena
(86) International application number: PCT/JP2018/027419
(87) International publication number: WO 2019/021982

(57) **Abstract**

In connecting between lensed optical fibers 1 in which a rod-shaped GRIN lens 3 is coaxially fused with a tip of an optical fiber 2, end faces of the lensed optical fibers 1 are spherically polished with a curvature radius R of 2 mm or more to crimp the end faces with each other, whereby a connection loss upon performing PC connection is reduced.

## Description

### Technical Field

The present invention relates to a connection structure of a lensed optical fiber preferable for performing PC connection between lensed optical fibers in which a rod-shaped GRIN lens is coaxially fused with a tip of an optical fiber.

### Background Art

In an optical communication network, such a lensed optical fiber is known as the lensed optical fiber in which a rod-shaped gradient index (GRIN) lens is coaxially fused with a tip of an optical fiber so that, upon connecting between optical fibers for transmitting an optical signal, the optical fibers can be connected with high efficiency and with a low loss (see Patent Document 1).

Moreover, as an optical connector for connecting the optical fibers for transmitting the optical signal, a single fiber coupling (SC) type optical connector for a single fiber, a mechanically transferable (MT) type optical connector for a multifiber, and the like are known. The GRIN lens is formed with the same diameter as the optical fiber in the lensed optical fiber, whereby the optical connectors can be applied also for connection between the lensed optical fibers.

### Related Art Documents

### Patent Documents

Patent Document 1: JP-A-2003-227963

### Summary of the Invention

### Problems to be Solved by the Invention

In order to connect between optical fibers by the optical connecter as described above, physical contact (PC) connection in which end faces with each other are abutted to be physically brought into contact with each other is generally adopted for reducing a connection loss by Fresnel reflection. For example, in an optical connector for a single fiber, such as an SC type optical connector, spherically polished end faces of a ferrule are crimped each other by a spring pressure in the connector to realize the PC connection.

However, the optical fiber and the ferrule are different in a material, and if the end face of the optical fiber is undercut from the end face of the ferrule by a difference in a polishing rate or a change in temperature, the PC connection becomes unable to be realized. Therefore, studies for realizing the PC connection with high reliability have been conducted so far by specifying a curvature radius upon spherically polishing a ferrule end face, an offset, an optical fiber height or the like so that cores can be securely contacted with each other by elastic deformation of the ferrule end face.

In a lensed optical fiber, light emitted from the core is subjected to diameter expansion by a GRIN lens, whereby a beam diameter on a connection surface thereof increases. Therefore, a situation is different from the case where the optical fibers with each other are subjected to the PC connection. Studies on the connection structure in consideration of such a difference have not been conducted.

The present applicants have diligently continued to conduct studies in order to provide a connection structure preferable for performing PC connection between lensed optical fibers in which a rod-shaped GRIN lens is coaxially fused with a tip of an optical fiber. As a result, the present applicants have completed the present invention.

### Means for Solving the Problems

A connection structure of lensed optical fibers according to the present invention relates to the connection structure for connecting between the lensed optical fibers in which a rod-shaped GRIN lens is coaxially fused with a tip of an optical fiber, wherein the connection structure is formed into a configuration in which end faces of lensed optical fibers are spherically polished with a curvature radius of 2 mm or more to crimp the end faces with each other.

### Advantageous Effects of the Invention

According to the present invention, a connection loss upon performing PC connection between lensed optical fibers in which a rod-shaped GRIN lens is coaxially fused with a tip of an optical fiber can be reduced.

### Brief Description of the Drawings

Fig. 1 is an explanatory diagram showing a state before connection for one example of a connection structure of lensed optical fibers according to an embodiment of the present invention.
Fig. 2 is an explanatory diagram showing a state during connection for one example of a connection structure of lensed optical fibers according to the embodiment of the present invention.
Fig. 3 is a histogram showing measurement results of a connection loss in Examples.
Fig. 4 is a graph showing a relationship between a connection loss and a curvature radius from the measurement results in Examples.

### Mode for Carrying out the Invention

Hereinafter, an embodiment of the present invention will be described with reference to drawings.

A connection structure of lensed optical fibers according to the present embodiment is formed for performing PC connection between lensed optical fibers 1 in which a rod-shaped GRIN lens 3 is coaxially fused with a tip of an optical fiber 2.

In the present embodiment, in performing the PC connection between the lensed optical fibers 1, the GRIN lens 3 to be fused with the tip of the optical fiber 2 is formed with the same diameter as the optical fiber 2 (for example, 125 µm), whereby a publicly-known optical connector such as an SC type optical connector and an MT type optical connector can be used.

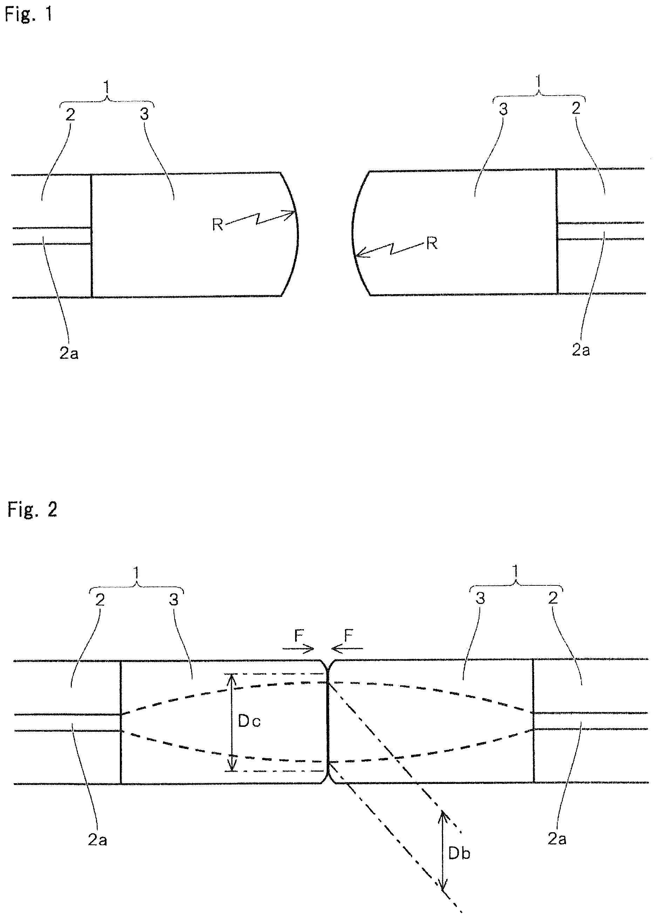

Here, Fig. 1 and Fig. 2 are an explanatory diagram showing an example in which end faces with each other are crimped by a spring in an optical connector to perform the PC connection between the lensed optical fibers 1, in focusing on a pair of lensed optical fibers 1 with omitting illustration of the optical connector. Fig. 1 shows a state before connection and Fig. 2 shows a state during connection.

Moreover, in such a lensed optical fiber 1, for example, a length of the GRIN lens 3 is adjusted to 1/4 of an incident light wavelength to cause diameter expansion for light incident into the GRIN lens 3 from a core 2a of the optical fiber 2, whereby the resulting light can be emitted as parallel light (see Fig. 2). Thus, a loss caused by misalignment such as axial misalignment and angular misalignment is reduced, whereby the lensed optical fibers 1 can be connected with high efficiency and with a low loss.

It should be noted that light propagating inside the GRIN lens 3 is shown by a dotted line in Fig. 2.

In the present embodiment, the GRIN lens 3 is to include a gradient index lens having no cladding, and also a graded index (GI) optical fiber and the like, and is not particularly limited, as long as the GRIN lens 3 develops a lens function by a gradient index.

Moreover, the length of the GRIN lens 3 to be fused with the tip of the optical fiber 2 is not limited to the example described above, and can be appropriately adjusted so that desired emission characteristics may be obtained according to the gradient index, a numerical aperture or the like of the GRIN lens 3. Further, the GRIN lens 3 may be a lens formed by linking and integrating two or more kinds of lenses having different numerical apertures for adjusting the emission characteristics. A specific form of the GRIN lens 3 is not particularly limited, and upon abutting the end faces of the pair of lensed optical fibers 1 on each other to perform the PC connection, a beam diameter Db on the connection surface only needs to be larger than a core diameter of the optical fiber 2.

In the present embodiment, in consideration of causing diameter expansion of light emitted from the core of the optical fiber 2 by the GRIN lens 3 to increase the beam diameter Db on the connection surface, the end faces of the lensed optical fibers 1 are spherically polished with a curvature radius R of 2 mm or more, preferably 12 mm or more, and more preferably 15 mm or more (see Fig. 1), and the end faces with each other are crimped to perform the PC connection between the lensed optical fibers 1.

Thus, as shown in Fig. 2, when the spherically polished end faces of the lensed optical fibers 1 are crimped with each other and deformed by limited spring force F, even if an indentation amount of a spherical top is small, the end faces can be deformed to be large in a contact area between the end faces. As a result, light emitted from one lensed optical fiber 1 effectively suppresses light leakage upon entering the other lensed optical fiber 1, whereby a connection loss can be reduced.

Moreover, in performing the PC connection between the lensed optical fibers 1 in this manner, a contact diameter (diameter) Dc between the end faces deformed by crimping is preferably equal to or greater than the beam diameter Db on a contact surface. Thus, the connection loss upon abutting the end faces of the pair of lensed optical fibers 1 on each other to perform the PC connection can be further reduced.

### Examples

Hereinafter, the present invention will be described in more detail by giving specific Examples.

### [Examples 1 to 4, Comparative Example 1]

A silica glass GRIN lens (manufactured by Toyo Seikan Group Holdings, Ltd.: SiGRIN) was coaxially fused with a tip of a single mode optical fiber to obtain a test object (lensed optical fiber).

Then, the test object was attached to an MT type optical connector, and the resulting material was spherically polished so that an end face may have the following curvature radius.

Example 1: 2.2 mm, Example 2: 4.9 mm, Example 3: 12.7 mm, Example 4: 15.1 mm, Comparative Example 1: curvature radius: 1.6 mm

It should be noted that the curvature radius was measured in accordance with 4.3 in IEC 61300-3-30: 2010.

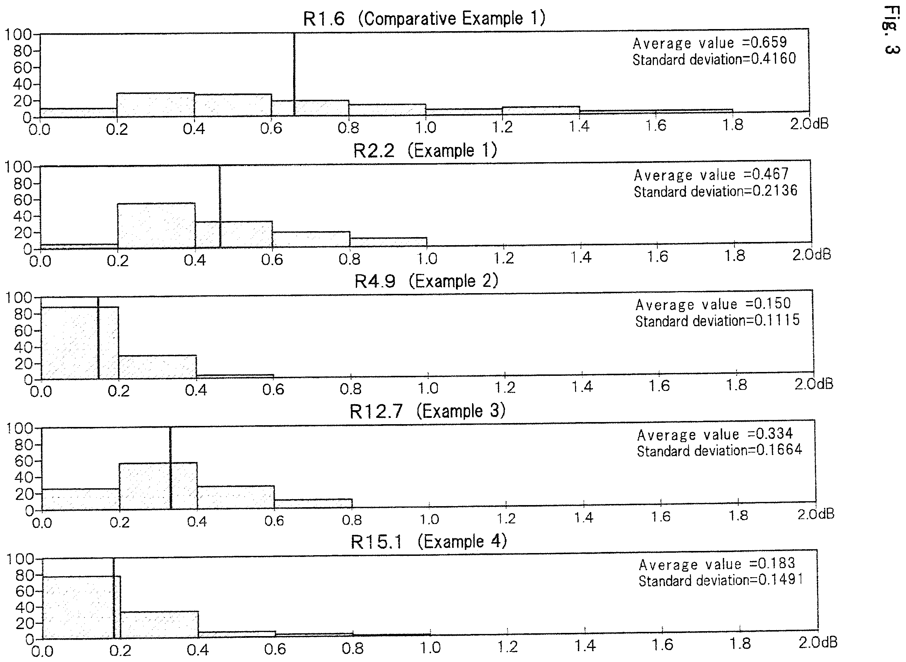

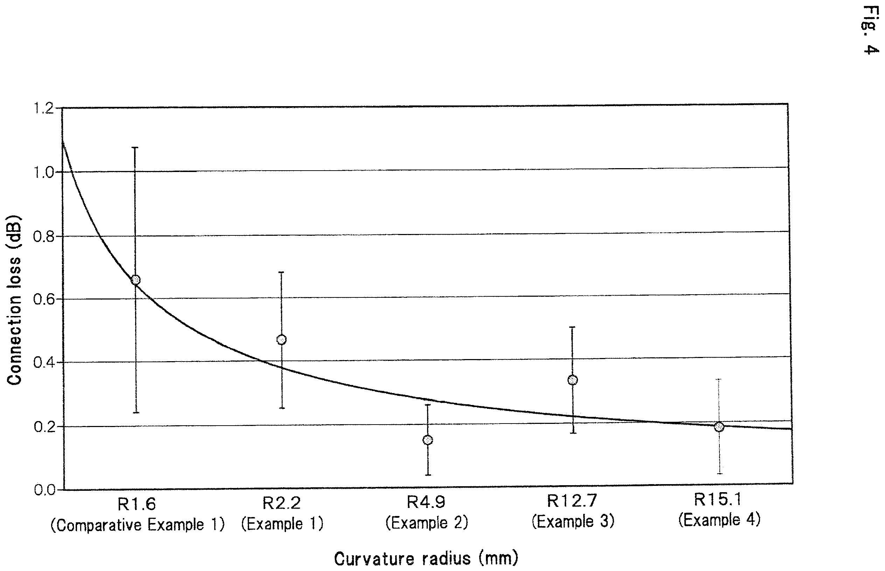

A connection loss upon performing PC connection was measured on each of Examples 1 to 4 and Comparative Example 1 in accordance with 5.4 in IEC 61300-3-4: 2011. The results are shown in Fig. 3 and Fig. 4.

It should be noted that a number N was set to be 120 in all of Examples 1 to 4 and Comparative Example 1. The connection loss was measured and compared under the conditions in which the experiment was conducted under the same conditions except for the curvature radius.

From the results obtained, it was able to be confirmed that the connection loss is reduced and variations are also small in Examples 1 to 4.

As described above, the present invention has been described by showing preferred embodiments, but the present invention is not limited to the embodiments described above, and various modifications can be obviously made within the scope of the present invention.

For example, as a technology on spherically polishing the optical connector, it is generally known that a ferrule tip is spherically polished in a state in which the optical fiber is inserted into the ferrule and fixed with an adhesive. In the present invention, in order to spherically polish the end face of the lensed optical fiber, the end face may be spherically polished together with the ferrule in a state in which the optical fiber is inserted into the ferrule and fixed. The lensed optical fiber may be held by an appropriate jig to spherically polish the end face, and then the optical fiber may be held to the ferrule to crimp the end faces with each other. Moreover, the ferrule may be for a single fiber or may be for a multifiber.

The entire contents of the documents described in the description concerning the present application and the description of the Japanese application serving as a basis of claiming the priority concerning the present application to the Paris Convention are incorporated by reference herein.

### [Explanation of numerical symbols]

- 1: Lensed optical fiber
- 2: Optical fiber
- 3: GRIN lens

## Claims

1. A connection structure for connecting between lensed optical fibers in which a rod-shaped GRIN lens is coaxially fused with a tip of an optical fiber, wherein
end faces of the lensed optical fibers are spherically polished with a curvature radius of 2 mm or more to crimp the end faces with each other.

2. The connection structure of the lensed optical fibers according to claim 1, wherein a contact diameter between the end faces deformed by crimping is equal to or greater than a beam diameter on a contact surface.
